# EUROPEAN PATENT APPLICATION

(11) **EP 4 286 027 A1**
(43) Date of publication of application: **06.12.2023**
(21) Application number: 22382521.7
(22) Date of filing: 31.05.2022
(51) Int. Cl.: B01D 21/00, B01D 21/24, C02F 1/38, E03F 5/14, E03F 5/16, B01D 39/10, B01D 21/26, C02F 1/24, C02F 1/40, C02F 1/00, C02F 103/00

(54) **HYDRODYNAMIC SEPARATOR**

(71) Applicant: Hidrostank, S.L., 31300 Tafalla-Navarra (ES)
(72) Inventor: BUENO LOPEZ, Rebeca, 31300 TAFALLA-NAVARRA (ES); ESPARZA GORRAIZ, Joseba, 31300 TAFALLA-NAVARRA (ES); AYESA ITURRALDE, Alberto, 31300 TAFALLA-NAVARRA (ES)
(74) Representative: Urizar Villate, Ignacio

(57) **Abstract**

The present invention relates to a hydrodynamic separator, made up of a well (11), equipped with an upper manhole (12), to which storm water arrives through a pipe (1) connected to a tangential tube (2) and comes out through a pipe (10), inside of which it incorporates a central chamber (3), which incorporates a grate (4) inferiorly, forming a peripheral chamber (15) between both elements that is filled with filtered water after passing through the grate (4) before coming out through the outlet pipe (10), while the heavier particles accumulate in a lower chamber (6) and the hydrocarbons and grease present in the water accumulate in a chamber (7) located around the central chamber (3) and the grate (4).

## Description

### Field of the invention

The invention falls within the industrial sector of liquid separation, not provided for elsewhere, for example, in devices for separating or removing greasy or oily substances or similar floating material from water or wastewater. And also within the separation of solid particles in liquid suspension by sedimentation.

The object of the present invention is a hydrodynamic separator, also commonly referred to as a hydrocyclone, which is a device that enables, among other things, storm water pollution to be treated. This separator has been developed for treating the entire flow of storm water circulating through a manifold, increasing the treatment capacity and efficiency of the separators known up to now, by implementing new treatment phases.

### Background of the invention

The materials to be separated by this type of device are usually solids, such as sand, organic matter and other fine particles, or liquids that have a lower density than the main liquid flow, which can be oils and hydrocarbons, or crude solids, which can have a neutral buoyancy, such as rubbish that is deposited in the street, such as bottles, plastic packages, cigarette butts, etc.

Hydrodynamic treatment devices, also known as vortex separators, have been well known for years, for example through US3277926. These devices were created to facilitate the separation of sedimentable material, i.e., material contained in a liquid that tends to settle due to gravity. Later, in WO0062888, this same principle is used to also separate floating materials, such as grease, in said liquid, placing the elements of the hydrodynamic separator in opposite orientation, so that the flow of liquid acts by concentrating the floating solid matter, which rises in the container to an upper central region where it can be diverted from the normal flow of liquid through the container and collected for disposal thereof.

The efficiency of a hydrodynamic separator can be expressed quantitatively in terms of retention efficiency, on the one hand, of sedimentable particles the density of which is greater than that of water, and on the other hand, of floating elements the density of which is less than that of water, all of this inside the separator.

Known hydrodynamic separators are devices that internally conceal a great structural complexity, in general with the aim of optimising the performance thereof, although this is not an easy task, since small changes in their geometry can have important effects on retention efficiency.

### Description of the invention

The present invention solves the problems existing in the prior art in order to obtain a separator with a high degree of efficiency; to this end, a separator with a very simple structure has been devised, resulting in a very low manufacturing cost, which also hardly requires maintenance work since there are no moveable portions and the filter grates that are used are self-cleaning, so it does not require more maintenance than cleaning or emptying the accumulated waste from time to time by means of a suction truck, coupling a suction hose thereto for a short time.

In order to achieve the proposed objectives, mentioned in the previous section, the invention proposes a hydrodynamic separator, which has the features of claim 1.

The hydrodynamic separator object of the invention comprises a well, equipped with an upper manhole, to which storm water arrives through an inlet pipe and comes out through an outlet pipe, both located at the same level and approximately in the upper third of said well, wherein the following elements are included:
In the first place, a central chamber, which is located above the inlet and outlet pipes, and inferiorly supported on a grate that will always be below the water level marked by the outlet pipe. Between said central chamber and said grate, they form an annular chamber with respect to the well that will be filled with filtered water since, in order to access said annular chamber, it must necessarily pass through said grate. The filtered water will rise to the level marked by the outlet pipe.

The water accesses said central chamber through a tube the inlet of which is tangential with respect to said chamber, so that at the inlet to said central chamber a vortex is formed that causes the heavy particles to settle and the large ones to be thrown towards a lower grate where they are retained, while the floating materials remain inside the central chamber, retained therein unable to come out until the unit is cleaned.

The well is internally divided by a plate or plane that delimits two chambers, an upper chamber in which the aforementioned central chamber and the grate located below it are located, and another lower chamber in which the sands and sediments of the heavier particles accumulate that access it through at least one central window that is also used to extract said waste by suction through the manhole above the well.

Around the central chamber and the grate there is a deflector that forms a chamber in which the hydrocarbons and grease present in the water will be retained by flotation.

Inside the central chamber there is an internal chamber that has in the upper area, above the level marked by the water inlet and outlet pipes, relief ducts, or a spillway which, when the circulating flow is close to the maximum allowed by the outlet pipe, the water from the central chamber ascends through said internal chamber and comes out through the upper spillways to the chamber between the well and the central chamber and from there towards the outlet pipe. This internal chamber forms a second water outlet route when the circulating flow through the separator is close to being the maximum allowed by the inlet and outlet pipes; however, even when the water comes out through this internal chamber, it has been previously filtered.

### Description of the figures

As a complement to the description provided herein, and for the purpose of helping to make the features of the invention more readily understandable, the present specification is accompanied by a set of drawings which, by way of illustration and not limitation, represent the following:

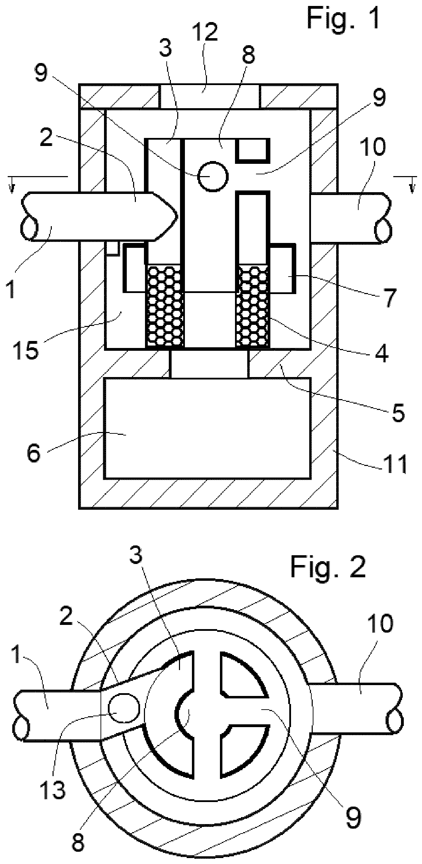

Fig. 1 shows a cross section along a vertical plane of a hydrodynamic separator made according to the present invention.
Fig. 2 corresponds to a cross section according to a horizontal plane indicated in Fig. 1

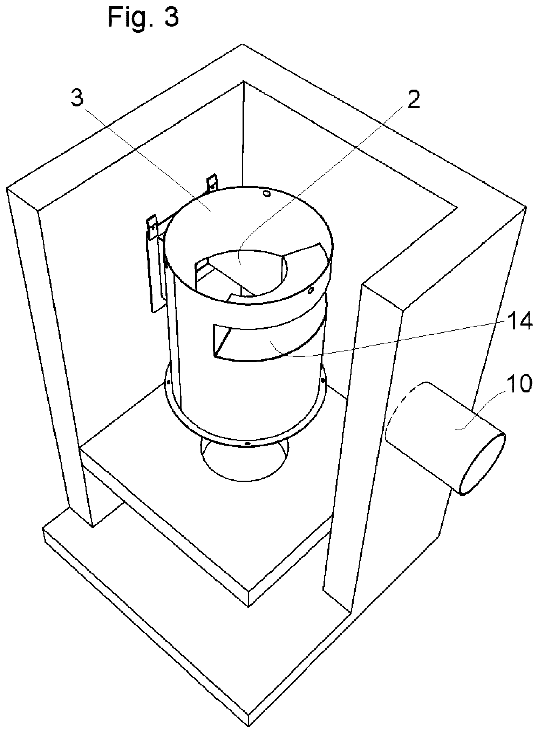

Fig. 3 is a perspective view of a separator from which the inner chamber (8) and the grate (4) have been extracted to facilitate the view of the central chamber (3).

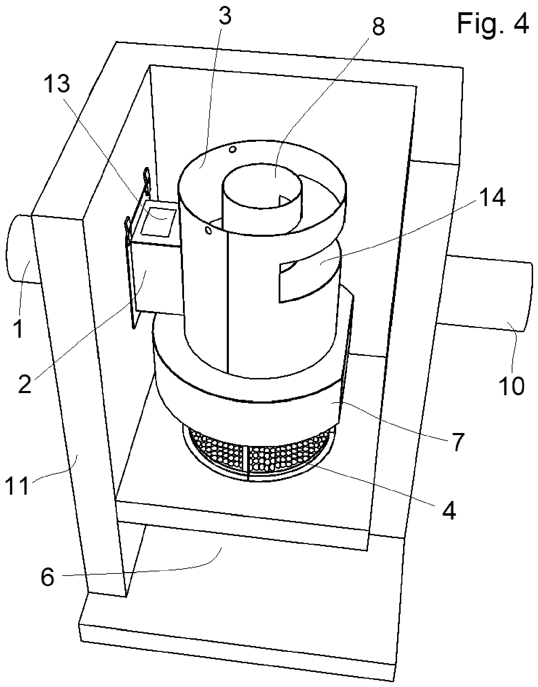

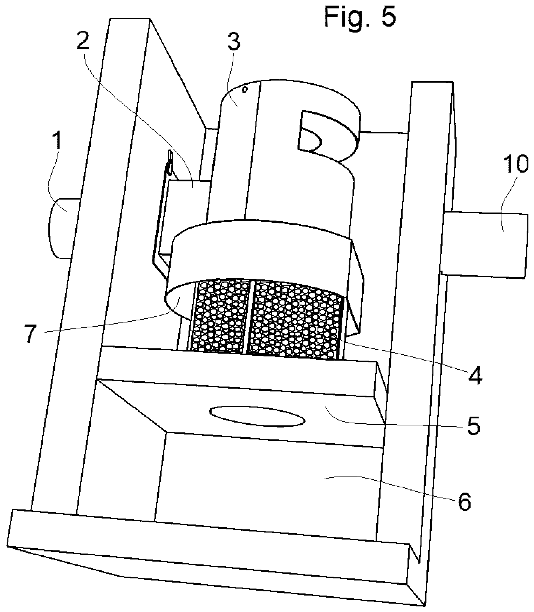

Figs. 4 and 5 show respective perspective views from an upper and lower plane, respectively, of a separator included in a well (11) that has been partially cross sectioned to be able to fully see the inner components thereof.

### Preferred embodiment of the invention

As can be seen in the referenced figures, the parts that make up this hydrodynamic separator are:
1. Inlet manifold
2. Tangential inlet pipe to the central chamber
3. Central Chamber
4. Direct or indirect sieving grate
5. Separation plate
6. Sand and sediment chamber
7. Deflector for grease chamber
8. Inner chamber for spillway
9. Second treatment spillway ducts
10. Outlet manifold
11. Well or pit
12. Manhole
13. Bypass - spillway
14. Second treatment spillway

As can be seen in the figures, the hydrodynamic separator comprises a well or pit (11) to which the storm water flow arrives through an inlet manifold (1) and comes out through an outlet manifold (10), both manifolds being (1, 10) located at the same height, approximately in the upper third of the well (11). This well (11) can be made in situ or be prefabricated, with square or circular geometry, and is equipped with at least one upper manhole (12) through which the cleaning operations of the equipment are performed. At mid-height, the well (11) has an intermediate separation plate or plane (5) that is provided with at least one central window that separates an upper chamber (15) from another lower chamber (6) in which the sands and sediments of the heavier particles accumulate.

Inside the well (11) there is a central chamber (3), located above the water inlet (1) and outlet (10) pipes in the well (11), which incorporates a grate (4) inferiorly below the water level marked by the outlet pipe (10). The central chamber (3), on the inlet side, connects with a water inlet pipe (1), which is connected to the well (11) by means of a joint that guarantees watertightness and from there through a tangential tube (2), which facilitates the entry of storm water into the central chamber (3) generating a vortex that causes heavy particles to settle and large ones to be thrown towards the lower grate (4) where they are retained. The chamber (3) and the grate (4) delimit an annular chamber (15) with respect to the inner wall of the well (11) that is filled with filtered water after passing through the grate (4) up to the level marked by the outlet pipe (10) connecting to said chamber (15).

The rotation of the fluid keeps the grate (4) clean and, in the case of an indirect sieving grate, it will also prevent it from becoming clogged. The floating materials will remain inside the central chamber (3) where they will accumulate unable to come out until the unit is cleaned by means of a suction lorry the hose of which is connected through the manhole (12) of the well (11).

As we have already indicated, the well (11) has an intermediate separation plate or plane (5), provided with at least one central window that separates the grate (4) from a lower chamber (6) wherein the sand and sediments of heavier particles accumulate. This chamber (6) is also accessible through said central window to be able to suck up the material deposited therein by means of a cleaning lorry the suction hose of which is inserted or coupled to the manhole (12).

The central chamber (3) incorporates peripherally and in the lower area, around the grate (4), a deflector that forms a chamber (7), open at the bottom, in which the hydrocarbons and grease will be retained due to the fact that the chamber (7) is superiorly closed and the grate (4) is below the water level and below said chamber (7), so that once the floating particles enter inside said chamber (7) they cannot escape.

Inside the central chamber (3) there is an internal chamber (8) that forms a secondary outlet route for the filtered water, so that the unit continues to work effectively when the circulating flow is close to the maximum allowed by the outlet pipe (10). In this case, the water from the central chamber (3), once filtered through the grate (4), will ascend through said internal chamber (8), which has in the upper area, above the level marked by the inlet (1) and outlet (10) pipes, relief ducts (9), or a spillway (14), through which the water from said internal chamber (8) comes out towards the chamber (15) between the well (11) and the central chamber (3) and from there to the outlet pipe (10). This internal chamber (8) is below the retention level of hydrocarbons and floating materials, so these continue to be retained in the chamber (7) despite the fact that in this way the treatment flow and the efficiency of the unit are increased.

In a preferred embodiment, the grate (4) has an annular configuration and has a width similar to that between the central chamber (3) and the internal chamber (8), so that the water that enters into said chamber (3) must necessarily pass through the grate (4) before passing to the internal chamber (8).

The grate (4) can be for direct or indirect sieving. They may also be subjected to surface treatments that increase their efficiency and prevent their clogging over time.

Optionally, the inlet pipe (11) incorporates a spillway (13), consisting of an opening on the upper face thereof which, when the inlet water flow is very high, functions as a bypass that delivers the water that is unable to be channelled through the tangential tube (2) to the chamber (15) existing between the well (11) and the central chamber (3).

The unit may be open through the manhole (12) or closed by means of a slab that will enable the required manholes for access, for cleaning and maintenance tasks to be located.

The units that require greater retention of hydrocarbons may incorporate sorbent materials that will increase their capacity for treating hydrocarbons and that once clogged must be replaced.

The equipment can be assembled in chambers or wells made in situ or in prefabricated elements that will be supplied to the customer with and without protection grates for large floating materials. In the represented embodiment, the equipment has been assembled on a concrete construction made for this purpose. The various components that make it up can be supplied as auxiliary elements to be placed, or they can be part of a piece of prefabricated equipment.

Having sufficiently described the nature of the invention, in addition to a preferred exemplary embodiment, it is hereby stated for the relevant purposes that the materials, shape, size and layout of the described elements may be modified, provided that it does not imply altering the essential characteristics of the invention claimed:

## Claims

1. A hydrodynamic separator, made up of a well (11), equipped with an upper manhole (12), to which storm water arrives through a pipe (1) and comes out through a pipe (10) located at the same level and approximately in the upper third of the well (11), which comprises:
- a central chamber (3), located above the water inlet (1) and outlet (10) pipes in the well (11), which incorporates a grate (4) inferiorly below the water level marked by the outlet pipe (10), which form between said chamber (3) and the grate (4), on the one hand, and the well (11) on the other hand, a chamber (15) that is filled with filtered water after passing through the grate (4) up to the level marked by the outlet pipe (10) that connects to said chamber (15);
- a tube (2) tangential with respect to the central chamber (3), which couples with the water inlet pipe (1), delivering the water into said central chamber (3) in the form of a vortex that causes heavy particles to settle and large ones to be thrown towards the lower grate (4) where they are retained, while the floating materials remain inside the central chamber (3) retained therein where they will accumulate unable to come out until the unit is cleaned;
- a separation plate or plane (5) for separating the well (11) into two heights, provided with at least one central window that separates the upper chamber (15) from a lower chamber (6) wherein sand and sediments of the heavier particles accumulate, said chamber being accessible through said central window for the extraction and cleaning by suction thereof through the manhole (12);
- a deflector, around the central chamber (3) and the grate (4), which forms a chamber (7), open at the bottom, wherein the hydrocarbons and grease present in the water are retained by floating.

2. The hydrodynamic separator, according to claim 1, further comprising, within the central chamber (3) an internal chamber (8) that has in the upper area, above the level marked by the inlet (1) and outlet (10) pipes, relief ducts (9), or a spillway (14) which, when the circulating flow is close to the maximum allowed by the outlet pipe (10), the water from the central chamber (3), once it has been filtered by the grate (4) ascends through said internal chamber (8) and comes out through the ducts (9) or spillway (14) to the chamber (15) between the well (11) and the central chamber (3) and from there to the outlet pipe (10).

3. The hydrodynamic separator, according to claim 2, wherein the internal chamber (8) is below the retention level of hydrocarbons and floating materials, so these continue to be retained in the chamber (7) provided for this purpose.

4. The hydrodynamic separator, according to claim 2, wherein the grate (4) has an annular configuration and has a width similar to that between the central chamber (3) and the internal chamber (8), such that the water that enters into said central chamber (3) must necessarily pass through the grate (4) before accessing the internal chamber (8).

5. The hydrodynamic separator, according to any of the preceding claims, wherein the inlet pipe (11) incorporates a spillway (13), consisting of an opening on the upper face thereof which, when the inlet water flow is very high, functions as a bypass that delivers the water that is unable to be channelled through the tangential tube (2) to the chamber (15) existing between the well (11) and the central chamber (3).

6. The hydrodynamic separator, according to claim 1, wherein the well (11) is made in situ and the remaining components of the separator are assembled therein, or on the contrary it is a prefabricated element that incorporates all or part of the components from the manufacture thereof.
